# EUROPÄISCHE PATENTANMELDUNG

(11) **EP 1 798 423 A2**
(43) Veröffentlichungstag der Anmeldung: **20.06.2007**
(21) Anmeldenummer: 06023708.8
(22) Anmeldetag: 15.11.2006
(51) Int. Cl.: F16B 1/00, F16B 37/14, A47G 3/00, B60B 7/16

(54) **Mutter mit einem Mutternkörper und einer auf dem Mutternkörper gehaltenen Kappe**

(30) Priorität: 19.12.2005 DE 102005061041; 22.06.2006 DE 102006028577
(71) Anmelder: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Lewandowsky, Klaus

(57) **Zusammenfassung**

Die vorliegende Erfindung betrifft eine Mutter (10, 110, 210) mit einem Mutternkörper (11, 111, 211) und einer auf dem Mutternkörper (11, 111, 211) gehaltenen Kappe (20, 120, 220, 320), dadurch gekennzeichnet, dass an der Außenfläche des Mutternkörpers (11, 111, 211) eine umlaufende Vertiefung (16, 216) oder abschnittsweise umlaufende Vertiefungen (116) vorgesehen sind, in die eine an der Innenfläche der Kappe (20, 120, 220, 320) vorgesehene umlaufende Erhöhung (23) bzw. abschnittsweise umlaufende Erhöhungen (123, 330) eingreifen.

## Beschreibung

Die vorliegende Erfindung betrifft eine Mutter mit einem Mutternkörper und einer auf dem Mutternkörper gehaltenen Kappe.

Derartige Muttern werden bspw. als Radmuttern verwendet, wobei die Kappe eine dekorative Funktion hat. Diese Muttern dienen insbesondere zur Befestigung von Radfelgen auf einer Radnabe. Die Kappen werden aus hochglanzpoliertem, rostfreiem Stahl hergestellt und auf den Mutternkörper aufgesetzt.

Es ist üblich, eine solche Kappe mit dem Mutternkörper einer Radmutter mittels einer elektrischen Ringschweißung fest zu verbinden. Dabei können jedoch Beeinträchtigungen der dekorativen Außenfläche der Kappe auftreten. Darüber hinaus sind mittlerweile Oberflächenbeschichtungen wie bspw. eine Lackschicht in Form einer Zink-Lamellen-Beschichtung üblich, die jedoch zum Teil nicht elektrisch leitend sind, und somit eine Schweißverbindung ausschließen.

Daher wird eine zuverlässige mechanische Verbindung zwischen dem Mutternkörper und der Kappe angestrebt. Aus der DE 102 56 653 A1 ist eine Radmutter bekannt, bei der mittels eines Arretierungsmittels die Kappe zusammen mit einer Druckscheibe auf dem Mutternkörper gehalten ist. Das Arretierungsmittel ist als ein an der Druckscheibe umlaufender Rand ausgebildet, der sowohl den Bund als auch einen am freien Ende der Kappe ausgebildeten Flansch übergreift. Eine derartige Befestigung der Kappe auf dem Mutternkörper ist aber dann nicht möglich, wenn eine Radmutter ohne Druckscheibe gewünscht ist. Die EP 1 422 427 A1 schlägt für diesen Fall vor, eine Kappe mit Untermaß mittels Presssitz auf dem Mutternkörper zu halten, wobei die Kappe elastisch und plastisch verformt wird. Die Montage ist jedoch schwierig, und die dekorative Oberfläche der Kappe kann beeinträchtigt werden. Außerdem besteht die Gefahr, dass sich die Kappe bei entsprechend großer mechanischer Beanspruchung vom Mutternkörper löst. Die US 4,015,503 schlägt hierzu vor, das untere freie Ende der Kappe in den Mutternkörper einzuziehen, was jedoch in der Herstellung sehr aufwändig ist. Gleiches gilt für den Vorschlag der US 5,772,377, das untere freie Ende der Kappe um einen umlaufenden Flansch am Mutternkörper umzubördeln. Dieser Vorschlag kann außerdem nicht verwirklicht werden, wenn auf einen Flansch verzichtet werden soll.

Die Aufgabe der vorliegenden Erfindung besteht darin, eine Mutter mit einem Mutternkörper und einer auf dem Mutternkörper gehaltenen Kappe so weiterzubilden, dass die Kappe sicher und zuverlässig auf dem Mutternkörper gehalten ist, wobei die Gestaltungsfreiheit für den Mutternkörper möglichst wenig eingeschränkt ist.

Die Lösung besteht in einer Mutter mit den Merkmalen des Patentanspruchs 1. Erfindungsgemäß ist vorgesehen, dass an der Außenfläche des Mutternkörpers eine umlaufende Vertiefung oder abschnittsweise umlaufende Vertiefungen vorgesehen sind, in die eine an der Innenfläche der Kappe vorgesehene umlaufende Erhöhung bzw. abschnittsweise umlaufende Erhöhungen eingreifen.

Die erfindungsgemäße Mutter zeichnet sich also dadurch aus, dass die Kappe und der Mutternkörper entlang ihrer Mantelflächen miteinander verbunden sind. Dabei greifen an der Innenfläche der Kappe vorgesehene umlaufende erhabene Strukturen in korrespondierende, an der Außenfläche des Mutternkörpers vorgesehene umlaufende vertiefte Strukturen ein. Der erfindungsgemäße Grundgedanke besteht somit darin, die Kappe nicht mit ihrem freien Ende, sondern oberhalb davon mit dem Mutternkörper zu verbinden. Diese Maßnahme kann mit Mutternkörpern beliebiger Ausgestaltung verwirklicht werden, so dass alle konstruktiven Beschränkungen hinsichtlich der Gestaltung des Mutternkörpers wegfallen. Außerdem wird eine sichere strukturelle Verbindung zwischen dem Mutternkörper und der Kappe hergestellt, die zuverlässiger als ein ausschließlicher Presssitz die Kappe auf dem Mutternkörper hält. Der Mutternkörper und die Kappe können schließlich durch einfache Umformprozesse in jeweils einem Arbeitsgang hergestellt werden, ein zusätzlicher Arbeitsschritt bspw. in Form einer spanenden Bearbeitung oder einer Bördelung, entfällt. Die Montage ist auch weit weniger aufwändig als eine Verschweißung der Kappe auf dem Mutternkörper. Schließlich können alle gewünschten Oberflächenbehandlungen der einzelnen Bauteile vorgenommen werden.

Vorteilhafte Weiterbildungen ergeben sich aus den Unteransprüchen.

Die Vertiefung bzw. die Vertiefungen sind zweckmäßigerweise im Bereich einer an der Außenfläche des Mutternkörpers vorgesehenen Angriffsfläche für ein Werkzeug, bspw. eines Sechskants, vorgesehen. Sie können in einer bevorzugten Ausführungsform aber auch oberhalb einer an der Außenfläche des Mutternkörpers vorgesehenen Angriffsfläche für ein Werkzeug angeordnet sein. Eine einzige umlaufende Vertiefung in der Außenfläche des Mutternkörpers und eine einzige umlaufende, bspw. wulstartige Erhöhung in der Innenfläche der Kappe sind dabei besonders einfach zu realisieren.

Eine weitere vorteilhafte Ausgestaltung der Erfindung besteht darin, die umlaufende Vertiefung in gleicher Form wie die Angriffsfläche für ein Werkzeug, bspw. als Sechskant, jedoch mit kleinerer Schlüsselweite auszubilden. Damit wird insbesondere die Automatisierung der Herstellung des Mutternkörpers vereinfacht. Dies ist bei der Herstellung von Massenprodukten wie des in Rede stehenden Mutternkörpers ein wesentlicher Kostenfaktor.

Wenn die umlaufende Vertiefung oberhalb der Angriffsfläche für ein Werkzeug vorgesehen ist, kann sie durch einen am Rand einer Stirnfläche des Mutternkörpers ausgebildeten überhängenden Wulst begrenzt sein. Der überhängende Wulst kann nach dem Herstellen des Mutternkörpers durch Stauchen der Stirnfläche des Mutternkörpers hergestellt werden. Damit wird ein klemmender Halt der Kappe durch einen formschlüssigen Halt ergänzt und unterstützt. Die Kappe sitzt somit fest und unverlierbar auf dem Mutternkörper.

Die Kappe der erfindungsgemäßen Mutter kann auch eine schmückende bzw. dekorative Funktion haben. In diesem Fall kann es wünschenswert sein, die Kappe einer solche Mutter mit einer glatten Außenfläche, also ohne radial nach innen gerichteter Erhöhungen, zu versehen. Eine Möglichkeit, eine solche Mutter herzustellen, besteht darin, die Kappe mit einer an ihren Innenflächen anliegenden Hülse zu versehen, die ihrerseits radial nach innen gerichtete Erhöhungen aufweist, die bei aufgesetzter Kappe in die am Mutternkörper ausgebildeten Vertiefungen eingreifen. Die Hülse kann durch Klemmen Kleben, Löten, Schweißen o. dgl. in der Kappe gehalten sein.

Der Mutternkörper kann selbstverständlich einen verbreiterten radialen Bund aufweisen, den die Kappe zumindest teilweise umgreift. Ferner kann der Mutternkörper unterhalb der Kappe eine konische Auflagefläche aufweisen. Dann ist es zweckmäßig, dass der freie umlaufende Rand der Kappe von der konischen Auflagefläche beabstandet ist, um die Montage der Mutter bspw. bei der Befestigung einer Radfelge nicht zu behindern. Schließlich kann die Kappe zusätzlich spielfrei, das heißt, mit einem leichten Presssitz, am Mutternkörper anliegen.

Ausführungsbeispiele der vorliegenden Erfindung werden im Folgenden anhand der beigefügten Zeichnungen näher erläutert. Es zeigen in schematischer, nicht maßstabsgetreuer Darstellung:
- Figur 1: ein erstes Ausführungsbeispiel einer erfindungsgemäßen Mutter, wobei die linke Hälfte eine Ansicht und die rechte Hälfte eine Darstellung im Schnitt ist;
- Figur 2: ein weiteres Ausführungsbeispiel einer erfindungsgemäßen Mutter, wobei die Kappe im Schnitt dargestellt ist;
- Figur 3: die Mutter gemäß Fig. 2 in einer Draufsicht im Schnitt;
- Figur 4: ein weiteres Ausführungsbeispiel eines Mutternkörpers für eine erfindungsgemäße Mutter in einer Seitenansicht;
- Figur 5: der Mutternkörper gemäß Figur 4 in einer Draufsicht;
- Figur 6: eine erfindungsgemäße Mutter mit einem Mutternkörper gemäß den Figuren 4 und 5 in einer teilweise geschnittenen Darstellung;
- Figur 7: ein weiteres Ausführungsbeispiel einer Kappe für eine erfindungsgemäße Mutter, wobei die Kappe mit einer Hülse versehen ist.

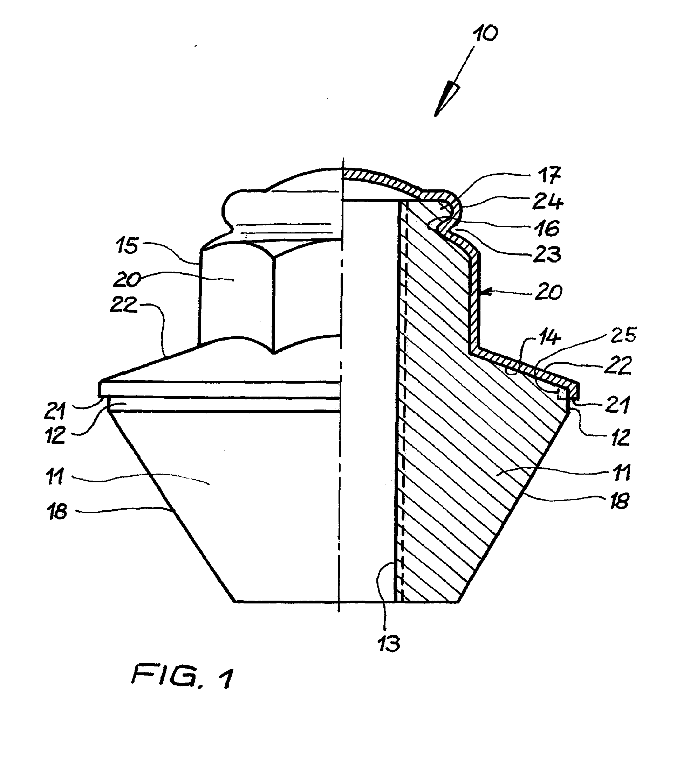

Das in Figur 1 gezeigte Ausführungsbeispiel einer erfindungsgemäßen Mutter ist eine Radmutter 10, die zur Befestigung einer Radfelge auf einer Radnabe dient. Die Radmutter 10 weist einen Mutternkörper 11 mit einem umlaufenden radial verbreiterten Bund 12 und einer unterhalb des Bundes 12 vorgesehenen konischen Auflagefläche 18 auf. Der Mutternkörper 11 ist mit einer axialen Gewindebohrung 13 zur Aufnahme eines Gewindebolzens (nicht dargestellt) versehen.

Der Mutternkörper 11 ist von einer Kappe 20 umhüllt, die bspw. aus poliertem, rostfreiem Stahl besteht. Das freie Ende 21 der Kappe 20 liegt auf dem radial verbreiterten Bund 12 des Mutterkörpers 11 auf, umgreift ihn aber nur teilweise (das heißt, das freie Ende 21 ist von der konischen Auflagefläche 18 beabstandet), um die Montage der Radmutter 10 auf eine Radfelge nicht zu behindern. Oberhalb des radial verbreiterten Bundes 12 ist der Mutternkörper 11 mit einer umlaufenden Schulter 14 versehen, und die Kappe 20 weist eine an die Form der Schulter 14 angepasste Stufe 22 auf. Diese mäanderähnliche Ausbildung verhindert weitgehend das Eindringen von Feuchtigkeit zwischen dem Mutternkörper 11 und der Kappe 20. Um diesen Effekt zu optimieren, sitzt die Kappe 20 mittels eines leichten Presssitzes auf dem Mutternkörper 11 auf. Zu dem gleichen Zweck liegt das freie Ende 21 der Kappe 20 auf dem radial verbreiterten Bund 12 des Mutternkörpers 11 mit einem leichten Presssitz an.

In einer Variante kann das freie Ende 21 der Kappe 20 auch in einem im radial verbreiterten Bund 12 ausgebildeten umlaufenden Absatz 25 aufliegen, wie er in Figur 1 gestrichelt dargestellt ist. Auch in diesem Fall kann das freie Ende 21 mit einem leichten Presssitz im Absatz 25 aufliegen.

Der Mutternkörper 11 ist oberhalb des radial verbreiterten Bundes 12 und der umlaufenden Schulter 14 im Ausführungsbeispiel mit einem Sechskant 15 zum Angriff eines Montagewerkzeugs versehen. Oberhalb des Sechskants 15 weist der Mutternkörper 11 eine umlaufende Vertiefung 16 auf, an die sich ein umlaufender Wulst 17 anschließt. Entsprechend zur Vertiefung 16 weist die Kappe 20 eine Erhöhung in Form einer umlaufenden Einschnürung 23 auf, die in die Vertiefung 16 des Mutternkörpers 11 eingreift. Oberhalb der Einschnürung 23 weist die Kappe 20 eine umlaufende Ausformung 24 auf, welche den Wulst 17 umschließt.

Sowohl der Mutternkörper 11 als auch die Kappe 20 können durch dem Fachmann bekannte Umformprozesse in jeweils einem Arbeitsschritt hergestellt werden, bspw. der Mutternkörper 11 durch Kalt- oder Warmpressen und die Kappe 20 durch Tiefziehen. Zur Montage der Kappe 20 auf dem Mutternkörper 11 bieten sich zwei Montageverfahren an.

Die erste Variante besteht darin, dass die Kappe 20 bereits beim Herstellungsprozess mit der Einschnürung 23 und der Ausformung 24 versehen wird. Dann wird die Kappe 20 einfach auf den Mutternkörper 11 bspw. wie bei einem Druckknopf aufgeklipst. Die zweite Variante sieht vor, dass die Kappe 20 mit einer zylindrischen Mantelfläche, das heißt, ohne Einschnürung und Ausformung hergestellt wird. Dann wird die Kappe 20 auf den Mutternkörper 11 aufgesetzt und mit einem geeigneten Werkzeug, bspw. einer der Einschnürung 23 angepassten Spannzange, wird die Einschnürung 23 und damit die Ausformung 24 nachträglich in die Kappe 20 eingeformt, so dass die Einschnürung 23 in die Vertiefung 16 des Mutternkörpers 11 eingreift.

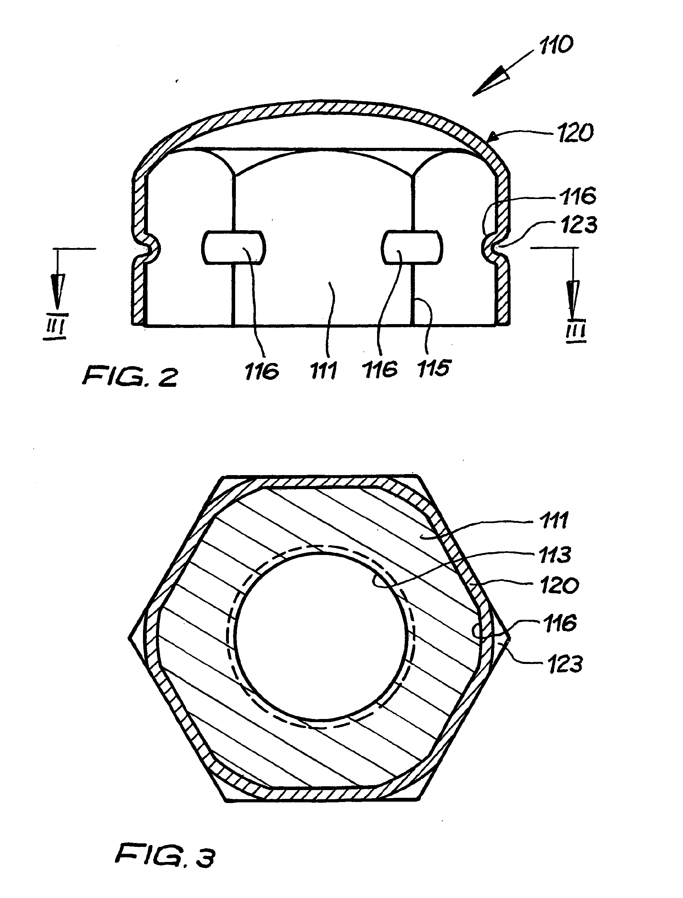

Die Figuren 2 und 3 zeigen ein weiteres Ausführungsbeispiel einer einfachen Mutter 110. Die Mutter 110 weist einen Mutternkörper 111 mit einer axialen Gewindebohrung 113 zur Aufnahme eines Gewindebolzens (nicht dargestellt) auf. Der Mutternkörper 111 ist von einer dekorativen Kappe 120 im Ausführungsbeispiel vollständig umhüllt, die bspw. aus poliertem, rostfreiem Stahl besteht. Die Kappe 120 sitzt mittels eines leichten Presssitzes auf dem Mutternkörper 111 auf.

Der Mutternkörper 111 ist im Ausführungsbeispiel mit einem Sechskant 115 zum Angriff eines Montagewerkzeugs versehen. Im Bereich des Sechskants 115 weist der Mutternkörper 111 mehrere umlaufende Vertiefungen 116 auf, die im Ausführungsbeispiel jeweils in den Kantenbereichen des Sechskants 115 angeordnet sind. Entsprechend zu den Vertiefungen 116 weist die Kappe 120 die gleiche Anzahl Erhöhungen in Form umlaufender Einschnürungen 123 auf, wobei jede Einschnürung 123 in eine korrespondierende Vertiefung 116 des Mutternkörpers 111 eingreift.

Sowohl der Mutternkörper 111 als auch die Kappe 120 können durch dem Fachmann bekannte Umformprozesse in jeweils einem Arbeitsschritt hergestellt werden, bspw. der Mutternkörper 111 durch Kalt- oder Warmpressen und die Kappe 120 durch Tiefziehen. Zur Montage der Kappe 120 auf dem Mutternkörper 111 bieten sich zwei Montageverfahren an.

Die erste Variante besteht darin, dass die Kappe 120 bereits beim Herstellungsprozess mit den Einschnürungen 123 versehen wird. Dann wird die Kappe 120 einfach auf den Mutternkörper 111 bspw. wie bei einem Druckknopf aufgeklipst. Die zweite Variante sieht vor, dass die Kappe 120 ohne Einschnürungen, das heißt, im Ausführungsbeispiel mit einer Sechskant-Mantelfläche, hergestellt wird. Dann wird die Kappe 120 auf den Mutternkörper 111 aufgesetzt, und mit einem geeigneten Werkzeug werden die Einschnürungen 123 nachträglich in die Kappe 120 eingeformt, so dass die Einschnürungen 123 in die Vertiefungen 116 des Mutternkörpers 111 eingreift.

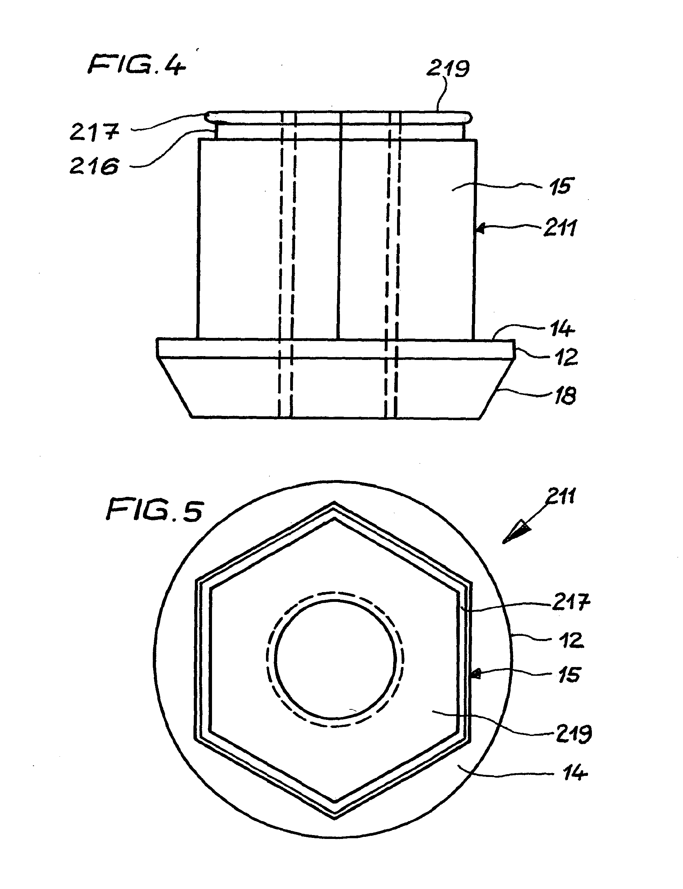

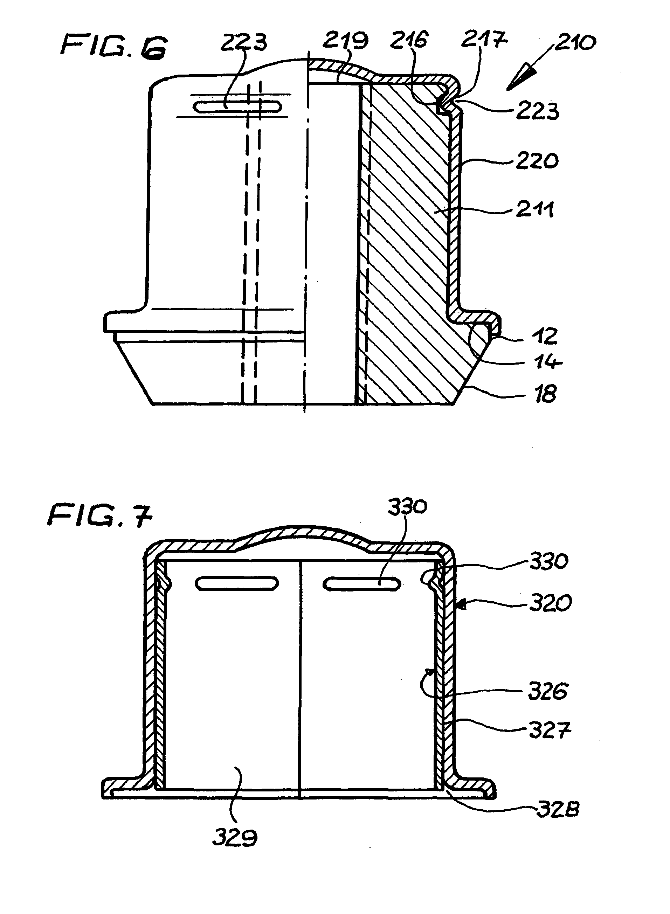

Die Figuren 4 und 5 zeigt ein weiteres Ausführungsbeispiel eines Mutternkörpers 211 für eine erfindungsgemäße Mutter 210. Auch der Mutternkörper 211 ist oberhalb des radial verbreiterten Bundes 12 und der umlaufenden Schulter 14 im Ausführungsbeispiel mit einem Sechskant 15 zum Angriff eines Montagewerkzeugs versehen. Oberhalb des Sechskants 15 weist der Mutternkörper 211 eine umlaufende Vertiefung 216 auf, die ebenfalls in Form eines Sechskants, also in gleicher Form wie der Sechskant 15, jedoch mit einer kleineren Schlüsselweite ausgebildet ist.

Ein umlaufender Wulst 217 schließt sich an die Vertiefung 216 an. Der Wulst 217 kann, wie bspw. auch der Wulst 17 gemäß Figur 1, gebildet werden, indem der Mutternkörper 11, 211 durch ein Umformverfahren hergestellt wird, wobei die Vertiefung 16, 216 in Form eines einstückig auf dem Sechskant 15, 215 ausgebildeten Ansatzes, ausgebildet wird. Anschließend wird die Stirnfläche 219 gestaucht, so dass der Wulst 17, 217 gebildet wird.

Figur 6 zeigt eine erfindungsgemäße Mutter 210 mit dem in den Figuren 4 und 5 dargestellten Mutternkörper 211 und einer Kappe 220. Die Kappe 220 ist die gleiche wie die Kappe 20 für die Mutter 10 gemäß Figur 1. Zur Montage der Kappe 220 auf dem Mutternkörper 211 werden nach dem Aufsetzen der Kappe 220 mit einem Werkzeug die Einschnürungen 223 in die Kappe 220 eingeformt. Die Einschnürungen 223 greifen dann in die Vertiefung 216 ein, wie es entsprechend für die Mutter 10 gemäß Figur 1 beschrieben wurde.

Figur 7 zeigt ein weiteres Ausführungsbeispiel einer Kappe 320 für eine erfindungsgemäße Mutter. Der nicht dargestellte Mutternkörper entspricht dem bereits beschriebenen Mutternkörper 11, 111, 211. Die Kappe 320 weist auch nach ihrer Montage auf den Mutternkörper eine glatte Außenfläche auf, das heißt, es gibt keine sichtbaren Einschnürungen, die den Einschnürungen 23, 123, 223 entsprächen. Stattdessen ist die Kappe 320 mit einer Hülse 326 versehen. Die Hülse 326 kann aus demselben Material wie die Kappe 320 oder einem beliebigen anderen metallischen Werkstoff oder ggf. einem geeigneten Kunststoff bestehen. Die Hülse 326 liegt an der Innenfläche 327 der Kappe 320 an und kann bspw. durch Klemmen, Kleben, Löten, Schweißen o. dgl. in der Kappe 320 gehalten sein. Bei geeigneter Ausgestaltung von Kappe 320 und Hülse 326 bildet sich am offenen Ende der Kappe 320 bzw. Hülse 326 eine ringförmig umlaufende Fuge 328, die bspw. mit einem Kleber, einem Lot oder einem Schweißmaterial gefüllt werden kann.

Die Innenseite 329 der Hülse 320 ist mit Erhöhungen 330 versehen, die bei auf den Mutternkörper 11, 111, 211 aufgesetzter Kappe 320 in die umlaufende Vertiefung 16, 216 (vgl. Figur 1) bzw. in die abschnittsweise umlaufenden Vertiefungen 116 (vgl. Figur 2) eingreifen. Beim Aufsetzen der Kappe 320 schnappen die Erhöhungen 330 aufgrund der Elastizität des Materials in die Vertiefung 16, 216 bzw. die Vertiefungen 116 ein.

Die vorliegende Erfindung lässt sich selbstverständlich auch mit einer Schraube anstelle einer Mutter realisieren.

## Patentansprüche

1. Mutter (10, 110, 210) mit einem Mutternkörper (11, 111, 211) und einer auf dem Mutternkörper (11, 111, 211) gehaltenen Kappe (20, 120, 220, 320), **dadurch gekennzeichnet, dass** an der Außenfläche des Mutternkörpers (11, 111, 211) eine umlaufende Vertiefung (16, 216) oder abschnittsweise umlaufende Vertiefungen (116) vorgesehen sind, in die eine an der Innenfläche der Kappe (20, 120, 220, 320) vorgesehene umlaufende Erhöhung (23) bzw. abschnittsweise umlaufende Erhöhungen (123, 223, 330) eingreifen.

2. Mutter nach Anspruch 1, **dadurch gekennzeichnet, dass** die Vertiefung bzw. die Vertiefungen (116) im Bereich einer an der Außenfläche des Mutternkörpers (111) vorgesehenen Angriffsfläche (115) für ein Werkzeug vorgesehen ist bzw. sind.

3. Mutter nach Anspruch 1, **dadurch gekennzeichnet, dass** die Vertiefung (16, 216) bzw. die Vertiefungen oberhalb einer an der Außenfläche des Mutternkörpers (11, 211) vorgesehenen Angriffsfläche (15) für ein Werkzeug vorgesehen ist bzw. sind.

4. Mutter nach einem der vorhergehenden Ansprüche, **dadurch gekennzeichnet, dass** die umlaufende Vertiefung (216) in gleicher Form wie die Angriffsfläche (15) für ein Werkzeug, jedoch mit kleinerer Schlüsselweite, ausgebildet ist.

5. Mutter nach Anspruch 3 oder 4, **dadurch gekennzeichnet, dass** die Vertiefung (16, 216) durch einen im Bereich einer Stirnfläche (219) des Mutternkörpers (11, 211) ausgebildeten überhängenden Wulst (17, 217) begrenzt ist.

6. Mutter nach einem der vorhergehenden Ansprüche, **dadurch gekennzeichnet, dass** eine an der Innenfläche der Kappe (320) anliegende Hülse (326) vorgesehen ist, an welcher die umlaufende Erhöhung bzw. abschnittsweise umlaufende Erhöhungen (330) ausgebildet sind, die in die umlaufende Vertiefung (16, 216) bzw. abschnittsweise umlaufende Vertiefungen (116) eingreifen.

7. Mutter nach Anspruch 6, **dadurch gekennzeichnet, dass** die Hülse (326) in der Kappe (320) durch Klemmen, Kleben, Löten, Schweißen o. dgl. gehalten ist.

8. Mutter nach einem der vorhergehenden Ansprüche, **dadurch gekennzeichnet, dass** der Mutternkörper (11, 111, 211) einen verbreiterten radialen Bund (12) aufweist, den die Kappe (20, 120, 220, 320) zumindest teilweise umgreift.

9. Mutter nach einem der vorhergehenden Ansprüche, **dadurch gekennzeichnet, dass** sie unterhalb der Kappe (20, 120, 220, 320) eine konische Auflagefläche (18) aufweist.

10. Mutter nach Anspruch 9, **dadurch gekennzeichnet, dass** die Kappe (20, 120, 220, 320) einen freien umlaufende Rand (21) aufweist, der von der konischen Auflagefläche (18) beabstandet ist.

11. Mutter nach einem der vorhergehenden Ansprüche, **dadurch gekennzeichnet, dass** die Kappe (20, 120, 220, 320) spielfrei am Mutternkörper (11, 111, 211) anliegt.
